# EUROPÄISCHE PATENTSCHRIFT

(11) **EP 3 902 718 B1**
(45) Veröffentlichungstag und Bekanntmachung des Hinweises auf die Patenterteilung: **16.08.2023**
(21) Anmeldenummer: 19832379.2
(22) Anmeldetag: 20.12.2019
(51) Int. Cl.: B60S 1/38

(54) **WISCHBLATT**
WIPER BLADE
BALAI D'ESSUIE-GLACE

(30) Priorität: 27.12.2018 DE 102018251736
(43) Veröffentlichungstag der Anmeldung: 03.11.2021
(73) Patentinhaber: Robert Bosch GmbH, 70442 Stuttgart (DE)
(72) Erfinder: TRUYENS, Stijn, 3300 Tienen (BE)
(86) Internationale Anmeldenummer: PCT/EP2019/086601
(87) Internationale Veröffentlichungsnummer: WO 2020/136112

(56) Entgegenhaltungen:
- WO-A1-2019/096526
- CN-U- 206 465 910
- DE-A1-102005 037 269
- US-A- 2 063 375
- US-A- 2 939 165

## Beschreibung

### Stand der Technik

Die Erfindung betrifft ein Wischblatt nach der Gattung des unabhängigen Anspruchs. Sie betrifft dabei ein Wischblatt, das an einer Frontscheibe auf der Fahrer- oder Beifahrerseite, aber auch an einer Heckscheibe eines Fahrzeugs eingesetzt werden kann.

Aus der WO 2011 029660 A1 ist ein Wischblatt in Flachbalkenbauweise mit einer Wischleiste bekannt, bei der eine Kopfleiste der Wischleiste von seitlichen Halteprofilen eines Wischleistenträgers gehalten wird, die in Längsnuten der Kopfleiste eingreifen, wobei der Wischleistenträger auf der der Kopfleiste abgewandten Seite mindestens einen Längskanal mit einem als rechteckige Federschiene ausgebildeten Tragelement aufweist. Durch die Halteprofile wird die Wischleiste gegen das Tragelement gehalten, wobei an dem Halteprofil ein Spoilerelement angeformt sein kann.

Aus der DE 10 2009 028 910 A ist ein Wischblatt in Flachbalkenbauweise bekannt, das aus einer Wischleiste besteht, die von freien Schenkeln eines Halteprofils über eine Nut an dem Halteprofil gehalten wird, wobei eine Federschiene in dem Halteprofil angeordnet ist. Die Wischleiste berührt dabei die Federschiene nicht und an dem Halteprofil ist ein Spoilerprofil ausgeformt.

Aus der DE 10 2008 042 280 A ist ein Wischblatt mit einem Spoiler bekannt, an dem Längskragen angeformt sind, die ein Tragelement halten, das wiederum in eine Nut einer Wischleiste eingreift und diese gegen den Spoiler hält. Das Tragelement ist dabei zweiteilig ausgeführt und hält die Wischleiste von beiden Seiten in einer Nut. Die Längskragen können mit dem Spoiler einstückig ausgeformt sein.

Aus der DE 10 2008 041 358 A1 ist ein Wischblatt mit einer Wischleiste bekannt, bei der ein Tragelement aus Federstahl in einem Hohlkanal in der Wischleiste aufgenommen ist.

Ein Wischblatt mit den Merkmalen des Oberbegriffs des Anspruchs 1 ist aus der WO 2019/096526 A1 und der CN 206465910 U bekannt.

Aus der DE 197 36 368 A1 ist ein Wischblatt für Scheiben von Kraftfahrzeugen bekannt, bei dem ein Spoiler mit einem Tragelement verklebt ist.

Aus der DE 10 2008 043 283 A1 ist ein Wischerblatt bzw. eine Wischleiste für eine Wischereinrichtung eines Fahrzeugs zum Wischen von Fahrzeugscheiben bekannt, bei der die Wischleiste einen Wischerabschnitt mit einem Hohlraum aufweist. Die Wände des Wischerabschnitts sind über eine Gelenkseinrichtung jeweils miteinander verbunden.

### OFFENBARUNG DER ERFINDUNG

Das Wischblatt mit den Merkmalen des Hauptanspruchs hat den Vorteil, dass durch eine Wischleiste mit zwei Schenkeln eine Optimierung des Verhaltens der Wischleiste möglich ist. Durch die Gestaltung der Schenkel kann das Verhalten insbesondere beim Umkippen einer Wischlippe während der Bewegungsumkehr bei der Wischbewegung besser optimiert werden und in Hinblick auf Geräusch sowie Reinigungsleistung optimiert werden. Dabei ist die Ausbildung eines Flachbalken-Wischblatts durch den Einsatz des Tragelements und der Halteleiste möglich.

Durch die in den Unteransprüchen aufgeführten Maßnahmen ergeben sich weiterhin vorteilhafte Weiterbildungen und Verbesserungen der in dem Hauptanspruch angegebenen Merkmale.

Die Halteleiste kann vorteilhaft eine Anströmfläche aufweisen und durch diese einen Spoiler bilden. Dadurch kann die Anzahl der Bauteile minimiert werden.

Vorteilhaft bilden die Schenkel der Wischleiste ein U-förmiges Querschnittsprofil, an dessen Basis die Wischlippe angeordnet ist. Es ergibt sich vorteilhaft eine breite Basis der Schenkel bei der Verbindung mit der Halteleiste und/oder dem Tragelement.

Wenn die Halteleiste Krallenabschnitte aufweist, mit denen eine Abstufung an den Schenkeln der Wischleiste gegen eine Basis der Halteleiste oder gegen das Tragelement gedrückt wird, kann vorteilhaft eine vertikale Kraft zur Verbindung der Bauteile ausgeübt werden und eine nicht lösbare, feste sowie gut zu optimierende Verbindung erreicht werden. Ein vorstehender Abschnitt des gummielastischen Materials der Wischleiste wird dabei von dem Krallenabschnitt der Halteleiste und einer eine Basis bildende Fläche der Halteleiste oder auch gegenüber dem Tragelement eingeklemmt. Dabei kann sich beispielsweise die Abstufung an den Schenkeln bzw. der vorstehende Abschnitt jeweils an der Außenseite der Schenkel befinden in Bezug auf die Öffnung zwischen den Schenkeln. Die Wischleiste wird dann symmetrisch gehalten. Wenn die Abstufung gegenüber der Basis der Halteleiste eingeklemmt ist, kann das Tragelement, bestehend aus einem oder mehreren beispielsweise bandförmigen Federstahlelementen, in einem Hohlkanal der Halteleiste angeordnet sein.

Nach der Erfindung besteht das Tragelement aus mindestens zwei stabförmigen Federelementen, insbesondere aus Federstahl. Vorteilhaft ist es, wenn das Tragelement aus drei bandförmigen Federelementen aufgebaut ist, von denen zwei außen von Nuten der Halteleiste auf die Schenkel der Wischleiste gedrückt werden und das dritte Federelement zwischen den Schenkeln der Wischleiste angeordnet ist. Das dritte Federelement stützt dabei zwischen den Schenkeln die Presskräfte der beiden äußeren Federelemente in horizontaler Richtung ab. Durch diese horizontale Einklemmung wird die Wischleiste gehalten, wobei die Klemmkraft durch die Elastizität der Halteleiste aufgebracht wird.

Nach der Erfindung sind die Schenkel der Wischleiste in Nuten der Halteleiste, insbesondere Nuten mit Kreisquerschnitt, eingesetzt und in Hohlkanäle sind innerhalb der Schenkel der Wischleiste im Bereich innerhalb der Nuten stabförmige Federelemente eingesetzt.

Dabei können zusätzlich bei eingesetzten Federelementen die Schenkel der Wischleiste in den Nuten gedehnt und gegen die Wände der Nuten gepresst werden. Es ist daher beispielsweise möglich, bei der Produktion die Wischleiste leicht beweglich in die Nuten einzuführen und einzuziehen. Wenn anschließend in einem weiteren Schritt das Federelement, beispielsweise ein Federstab, in den Hohlkanal innerhalb des Schenkels der Wischleiste hineingeschoben wird, wird das gummielastische Material geringfügig gedehnt und gegen die Wände der Nut gepresst. Es ergibt sich ein sicherer und nicht lösbarer Halt.

Vorteilhafterweise sind die Schenkel der Wischleiste in Nuten der Halteleiste, insbesondere Nuten mit Kreisquerschnitt, eingesetzt und ist zwischen dem Nuten in einem Hohlkanal in der Halteleiste ein bandförmiges Federelement eingesetzt. Weiterhin können bei eingesetztem Federelement die Halteleisten elastisch verformt sein und die Schenkel der Wischleiste in den Nuten gepresst werden. Auch bei diesem Ausführungsbeispiel ergibt sich der Vorteil, dass die Wischleiste bei nicht eingesetztem Federelement leicht in die Halteleiste bei der Produktion hineingezogen werden kann. Anschließend kann das Federelement in den Hohlkanal der Halteleiste gedrückt werden, wodurch diese im mittleren Bereich zur Seite hin ausgedehnt und eine Presskraft in den Nuten auf die Schenkel der Wischleiste ausgeübt wird. Es kommt zu einer nicht lösbaren und sicheren Befestigung.

In einer weiteren, alternativen und vorteilhaften Ausführungsform sind die Schenkel der Wischleiste mit dem Tragelement und/oder das Tragelement mit der Halteleiste verklebt.

Beschreibung der Zeichnungen Ausführungsbeispiele der Erfindung sind in den Zeichnungen dargestellt und in der nachfolgenden Beschreibung näher erläutert. Es zeigen:
Fig. 1 ein nicht beanspruchtes Beispiel eines Wischblatts im Querschnitt,
Fig. 2 ein nicht beanspruchtes Beispiel eines Wischblatts im Querschnitt,
Fig. 3 ein nicht beanspruchtes Beispiel eines Wischblatts im Querschnitt,
Fig. 4 ein nicht beanspruchtes Beispiel eines Wischblatts im Querschnitt,
Fig. 5 ein nicht beanspruchtes Beispiel eines Wischblatts im Querschnitt,
Fig. 6 ein Ausführungsbeispiel eines Wischblatts im Querschnitt und
Fig. 7 ein nicht beanspruchtes Beispiel eines Wischblatts im Querschnitt.

### Beschreibung der Ausführungsbeispiele

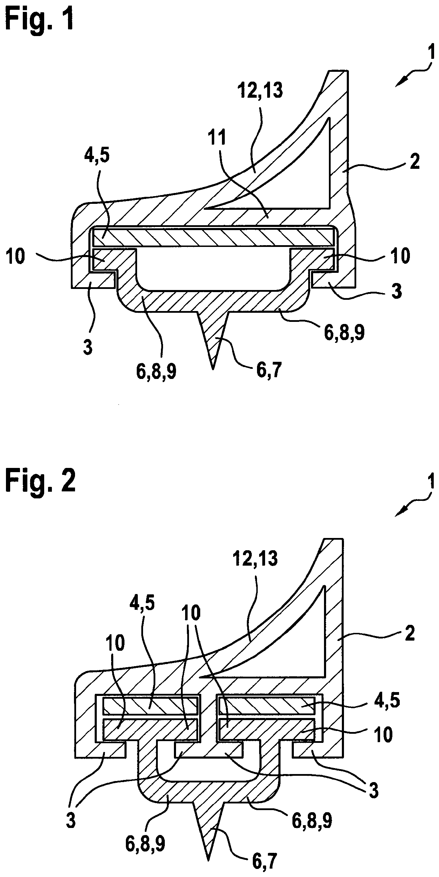

Die Fig. 1 zeigt ein nicht beanspruchtes Beispiel eines Wischblatts 1 im Querschnitt. Eine Halteleiste 2 umfasst mit Krallenabschnitten 3 ein Tragelement 4, das als Federstahlband 5 ausgebildet ist. Eine Wischleiste 6 aus einem gummielastischen Material weist eine Wischlippe 7 auf, von der zwei Schenkel 8 im Querschnitt nach oben offen und mit U-förmigen Querschnittsprofil 9 ausgehen. Die Krallenabschnitte 3 umfassen neben dem Tragelement 4 auch an den Schenkeln 8 außen angeordnete Abstufungen 10 und pressen diese gegen das Tragelement 4 und eine Basis 11 der Halteleiste 2.

An der Halteleiste 2 ist eine Anströmfläche 12 ausgebildet, sodass die Halteleiste 2 zugleich einen Spoiler 13 bildet.

Die Fig. 2 zeigt ein nicht beanspruchtes Beispiel des Wischblatts 1 im Querschnitt. Einander entsprechende Bauelemente sind hier und im Folgenden mit den gleichen Bezugszeichen versehen. Die Halteleiste 2 umfasst mit den Krallenabschnitten 3 das Tragelement 4, hier zweiteilig ausgeführt und beispielsweise als Federstahlbänder 5. Die Wischleiste 6 aus einem gummielastischen Material mit der Wischlippe 7 und zwei Schenkeln 8 mit U-förmigen Querschnittsprofil 9 wird an den äußeren Abstufungen 10 von den Krallenabschnitten 3 umfasst. Zusätzlich weist die Halteleiste 2 in der Mitte weitere Krallenabschnitte 3 auf, die nach innen von den Schenkeln 8 weisende Abstufungen 10 gegen das Tragelement 4 pressen. Durch die Anströmfläche 12 bildet die Halteleiste 2 auch hier einen Spoiler 13.

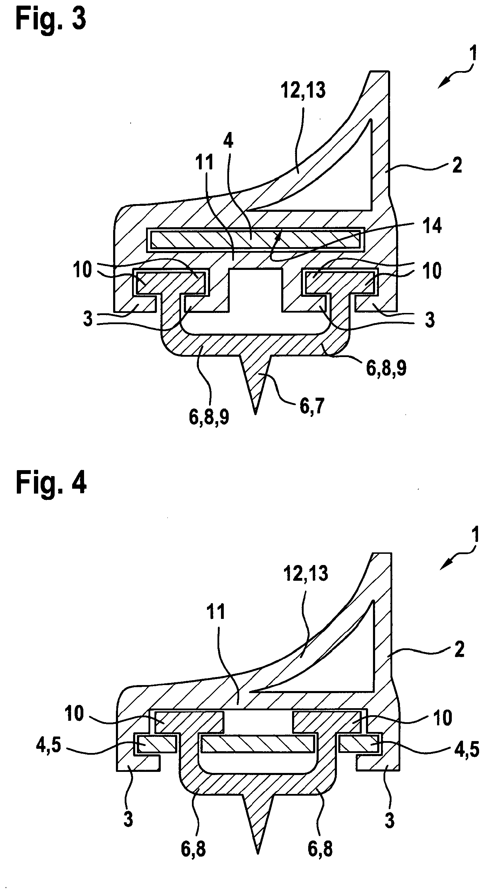

Die Fig. 3 zeigt ein nicht beanspruchtes Beispiel eines Wischblatts 1 im Querschnitt. Die Halteleiste 2 umschließt das einteilige Tragelement 4, das oberhalb der Basis 11 in einem Hohlkanal 14 in die Halteleiste 2 eingesetzt ist. Die Wischleiste 6 aus einem gummielastischen Material mit der Wischlippe 7 und zwei Schenkeln 8 mit U-förmigen Querschnittsprofil 9 wird an den Abstufungen 10 von Krallenabschnitten 3 umfasst und vertikal gegen die Basis 11 des Halteabschnitts 2 gepresst. Oberhalb der Basis 11 ist die Anströmfläche 12 angeordnet, durch die die Halteleiste 2 einen Spoiler 13 bildet.

Die Fig. 4 zeigt ein nicht beanspruchtes Beispiel eines Wischblatts 1 im Querschnitt. Die Halteleiste 2 mit der Anströmfläche 12 zur Bildung eines Spoilers 13 umfasst hier mit den Krallenabschnitten 3 die beiden äußeren Teile eines dreiteiligen Tragelements 4, die beispielsweise als Federstahlbänder 5 ausgebildet sind. Durch eine elastische Vorspannung der Halteleiste 2 werden diese äußeren Teile gegen die Schenkel 8 der Wischleiste 6 gedrückt. Ein dritter Teil des Tragelements 4 als Innenabschnitt 15 stützt diese Kräfte ab. Die Wischleiste 6 wird durch eine horizontale Klemmung fest und nicht lösbar gehalten. Zwischen Tragelement 4 und Basis 11 werden die Schenkel 8 zusätzlich durch deren Abstufungen 10 gesichert.

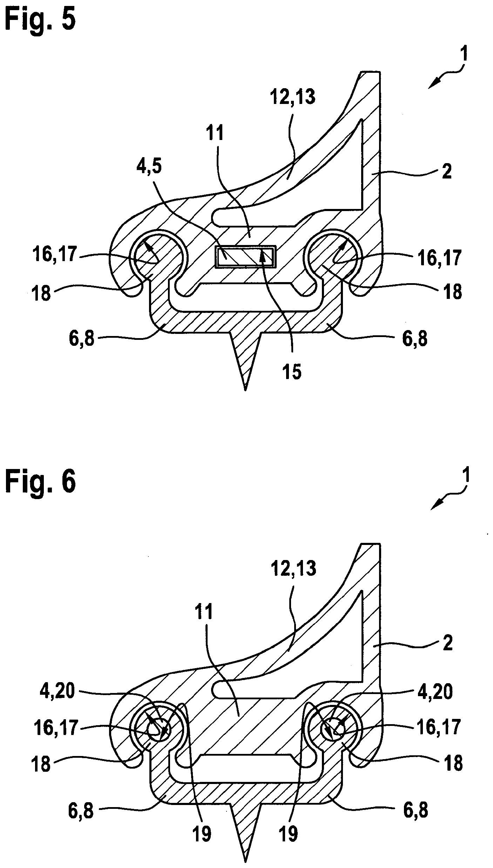

Die Fig. 5 zeigt ein nicht beanspruchtes Beispiel eines Wischblatts 1 im Querschnitt. Die Halteleiste 2 mit der Anströmfläche 12 zur Bildung eines Spoilers 13 weist Nuten 16 mit hier im Beispielsfall kreisförmigen Querschnitt 17 auf. In den Nuten 16 sind die Endabschnitte 18 der Schenkel 8 der Wischleiste 6 eingesetzt, die ebenfalls einen kreisförmigen Querschnitt aufweisen. Das Tragelement 4, beispielsweise in Form eines Federstahlbandes 5, ist in dem Hohlkanal 15 der Halteleiste 2 aufgenommen und drückt auf die Wände des Hohlkanals in Richtung der Nuten 16. Dadurch wird die Halteleiste 2 im Bereich der Basis 11 etwas gedehnt und eine Presskraft auf die Endabschnitte 18 der Schenkel 8 ausgeübt.

Die Fig. 6 zeigt ein Ausführungsbeispiel eines Wischblatts 1 im Querschnitt. Die Halteleiste 2 mit der Anströmfläche 12 zur Bildung eines Spoilers 13 weist die Nuten 16 mit hier im Beispielsfall kreisförmigen Querschnitt 17 auf. In den Nuten 16 sind die Endabschnitte 18 der Schenkel 8 der Wischleiste 6 eingesetzt, die ebenfalls einen kreisförmigen Querschnitt aufweisen. Innerhalb des gummielastischen Materials der Endabschnitte 18 der Schenkel 8 befindet sich jeweils ein Hohlkanal 19, in dem ein Tragelement 4 aus einem stabförmigen Federstahl 20 eingesetzt ist.

Wenn nach dem Einführen der Wischleiste 6 mit den Endabschnitten 18 in die Nuten 16 die stabförmigen Federstähle 20 eingesetzt werden, wird das gummielastische Material gedehnt und an die Wand der Nuten 16 gepresst. Dadurch wird die Wischleiste 6 fest und nicht lösbar gehalten.

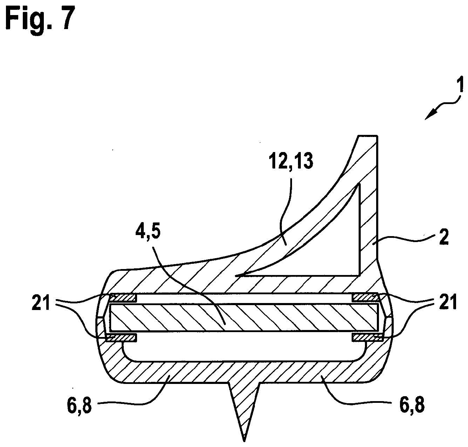

Die Fig. 7 zeigt ein nicht beanspruchtes Beispiel eines Wischblatts 1 im Querschnitt. Die Halteleiste 2 mit der Anströmfläche 12 zur Bildung eines Spoilers 13 ist mit dem bandförmigen Federstahl 5 als Tragelement 4 durch einen Klebstoff 21 verklebt. Ebenso ist die Wischleiste 6 mit den beiden Schenkeln 8 jeweils mit dem Tragelement 4 über den Klebstoff 21 an der Unterseite verklebt.

## Patentansprüche

1. Wischblatt zum Wischen von Scheiben, insbesondere von Kraftfahrzeugscheiben, mit einem Tragelement (4), das federelastisch ausgebildet ist und in Anlage des Wischblatts (1) an eine Scheibenfläche eine Anpresskraft ausübt, einer gummielastischen Wischleiste (6) mit einer Wischlippe (7) und einer Halteleiste (2), wobei die Wischleiste (6) von der Wischlippe (7) ausgehend im Querschnitt ein Profil mit zwei Schenkeln (8) aufweist und an beiden Schenkeln (8) mit der Halteleiste (2) und/oder dem Tragelement (4) verbunden ist, **dadurch gekennzeichnet,**
**dass** das Tragelement (4) aus mindestens zwei stabförmigen Federelementen (5,20) besteht, insbesondere aus Federstahl, und wobei die Schenkel (8) der Wischleiste (6) in Nuten (16) der Halteleiste (2), insbesondere Nuten (16) mit Kreisquerschnitt (17), eingesetzt sind und in Hohlkanälen (19) innerhalb der Schenkeln der Wischleiste (6) im Bereich innerhalb der Nuten (16) stabförmige Federelemente (20) eingesetzt sind.

2. Wischblatt nach Anspruch 1,
**dadurch gekennzeichnet,**
**dass** die Halteleiste (2) eine angeformte Anströmfläche (12) aufweist und einen Spoiler (13) bildet.

3. Wischblatt nach einem der vorhergehenden Ansprüche,
**dadurch gekennzeichnet,**
**dass** die Schenkel (8) der Wischleiste (6) ein U-förmiges Querschnittsprofil (9) bilden, an dessen Basis die Wischlippe (7) angeordnet ist.

4. Wischblatt nach Anspruch 1,
**dadurch gekennzeichnet,**
**dass** bei eingesetzten Federelementen (20) die Schenkel (8) der Wischleiste (6) in den Nuten (16) gedehnt und gegen die Wände der Nuten (16) gepresst werden.

5. Wischblatt nach einem der Ansprüche 1 bis 3,
**dadurch gekennzeichnet,**
**dass** die Schenkel (8) der Wischleiste (6) mit dem Tragelement (4) und/oder das Tragelement (4) mit der Halteleiste (2) verklebt sind.

## Claims

1. Wiper blade for wiping panes, in particular motor vehicle panes, having a supporting element (4) which is spring-elastic and exerts a pressing force in contact of the wiper blade (1) against a pane surface, a rubber-elastic wiper strip (6) with a wiper lip (7) and a retaining strip (2), wherein the wiper strip (6), in cross section starting from the wiper lip (7), has a profile with two limbs (8) and is connected at the two limbs (8) to the retaining strip (2) and/or to the supporting element (4), **characterized in that** the supporting element (4) consists of at least two rod-shaped spring elements (5, 20), in particular made from spring steel, and wherein the limbs (8) of the wiper strip (6) are inserted into grooves (16) of the retaining strip (2), in particular grooves (16) with a circular cross section (17), and rod-shaped spring elements (20) are inserted into hollow channels (19) within the limbs of the wiper strip (6) in the region within the grooves (16).

2. Wiper blade according to Claim 1, **characterized in that** the retaining strip (2) has an integrally formed flow impingement surface (12) and forms a spoiler (13).

3. Wiper blade according to either of the preceding claims, **characterized in that** the limbs (8) of the wiper strip (6) form a U-shaped cross-sectional profile (9), on the base of which the wiper lip (7) is arranged.

4. Wiper blade according to Claim 1, **characterized in that**, when the spring elements (20) are inserted, the limbs (8) of the wiper strip (6) are expanded in the grooves (16) and pressed against the walls of the grooves (16).

5. Wiper blade according to one of Claims 1 to 3, **characterized in that** the limbs (8) of the wiper strip (6) are adhesively bonded to the supporting element (4) and/or the supporting element (4) is adhesively bonded to the retaining strip (2).

## Revendications

1. Balai d'essuie-glace pour essuyer des vitres, notamment des vitres de véhicules automobiles, avec un élément porteur (4) qui est réalisé sous forme élastique et qui exerce une force de pression lorsque le balai d'essuie-glace (1) est en appui sur une surface de vitre, une lame d'essuyage (6) ayant l'élasticité du caoutchouc avec une lèvre d'essuyage (7) et une baguette de retenue (2), la lame d'essuyage (6) présentant en section transversale, en partant de la lèvre d'essuyage (7), un profil avec deux branches (8) et étant reliée au niveau des deux branches (8) à la baguette de retenue (2) et/ou à l'élément porteur (4), **caractérisé en ce que** l'élément porteur (4) est constitué d'au moins deux éléments élastiques (5, 20) en forme de barre, notamment en acier à ressort, et les branches (8) de la lame d'essuyage (6) étant insérées dans des rainures (16) de la baguette de retenue (2), notamment des rainures (16) à section transversale circulaire (17), et des éléments élastiques (20) en forme de barre étant insérés dans des canaux creux (19) à l'intérieur des branches de la lame d'essuyage (6) dans la zone à l'intérieur des rainures (16) .

2. Balai d'essuie-glace selon la revendication 1, **caractérisé en ce que** la baguette de retenue (2) présente une surface d'écoulement (12) rapportée et forme un spoiler (13).

3. Balai d'essuie-glace selon l'une quelconque des revendications précédentes, **caractérisé en ce que** les branches (8) de la lame d'essuyage (6) forment un profil de section transversale (9) en forme de U, à la base duquel est agencée la lèvre d'essuyage (7).

4. Balai d'essuie-glace selon la revendication 1, **caractérisé en ce que**, lorsque des éléments élastiques (20) sont insérés, les branches (8) de la lame d'essuyage (6) sont étirées dans les rainures (16) et pressées contre les parois des rainures (16).

5. Balai d'essuie-glace selon l'une quelconque des revendications 1 à 3, **caractérisé en ce que** les branches (8) de la lame d'essuyage (6) sont collées à l'élément porteur (4) et/ou l'élément porteur (4) est collé à la baguette de retenue (2).
